(19) Europäisches Patentamt
European Patent Office
Office européen des brevets

(11) Veröffentlichungsnummer: **0 330 022 A2**

# (12) EUROPÄISCHE PATENTANMELDUNG

(21) Anmeldenummer: **89102298.0**

(51) Int. Cl.4: **C07F 9/38**

(22) Anmeldetag: **10.02.89**

(30) Priorität: **24.02.88 DE 3805644**

(43) Veröffentlichungstag der Anmeldung:
**30.08.89 Patentblatt 89/35**

(84) Benannte Vertragsstaaten:
**BE CH DE FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Klose, Werner, Dr.**
**Grachtstrasse 14**
**D-5042 Erftstadt(DE)**
Erfinder: **Klemp, Helmut**
**Ursfelder Strasse 46**
**D-5014 Kerpen(DE)**

## (54) 1-Hydroxy-omega-(alkyl- bzw. arylphosphinico-)alkan-1,1-di-phosphonsäuren, deren Salze sowie Verfahren zur Herstellung dieser Verbindungen.

(57) Die vorliegende Erfindung betrifft 1-Hydroxy-ω-(alkyl -bzw. arylphosphinico-) alkan-1,1-diphosphonsäuren der allgemeinen Formel I

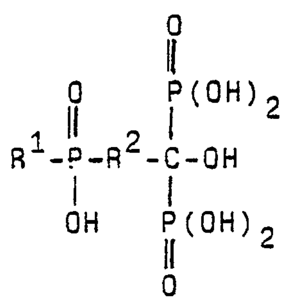

I

und die Salze dieser Säuren der allgemeinen Formel II

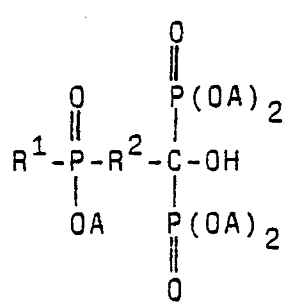

wobei in diesen Formeln $R^1$ einen Alkylrest mit 1 bis 6 C-Atomen, einen Cycloalkylrest mit 5 bis 7 oder einen Arylrest mit 6 bis 10 C-Atomen, $R^2$ einen geradkettigen oder verzweigten Alkylenrest mit 1 bis 6 C-Atomen und A ein einwertiges Äquivalent eines Kations einer anorganischen oder organischen Base

EP 0 330 022 A2

bedeuten. Außerdem werden Verfahren zur Herstellung dieser neuen Verbindungen beschrieben.

## 1-Hydroxy-ω-(alkyl - bzw. arylphosphinico-) alkan-1, 1-diphosphonsäuren, deren Salze sowie Verfahren zur Herstellung dieser Verbindungen

Die Erfindung betrifft 1-Hydroxy-ω-(alkyl - bzw. arylphosphinico-) alkan-1, 1-diphosphonsäuren und deren Salze gemäß den nachfolgenden allgemeinen Formeln I und II sowie Verfahren zur Herstellung dieser neuen Verbindungen.

In diesen Formeln I und II:

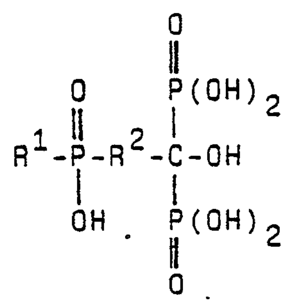

I

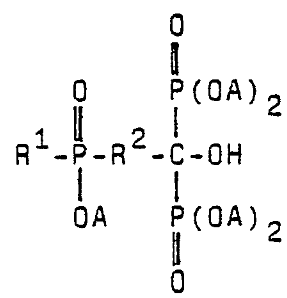

II

bedeuten $R^1$ einen Alkylrest mit 1 bis 6 C-Atomen, einen Cycloalkylrest mit 5 bis 7 C-Atomen oder einen Arylrest mit 6 bis 10 C-Atomen, $R^2$ einen geradkettigen oder verzweigten Alkylenrest mit 1 bis 6 C-Atomen und A ein einwertiges Äquivalent eines Kations einer anorganischen oder organischen Base.

Alkan-diphosphonsäuren der Formel I werden erhalten durch Umsetzung von Carboxyalkylphosphinsäuren der allgemeinen Formel III

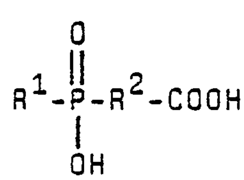

III

in der $R^1$ und $R^2$ die gleiche Bedeutung haben wie in der allgemeinen Formel I, mit Phosphonylierungsmitteln, Tempern des Umsetzungsproduktes bei 100 bis 160 °C und Hydrolyse des dabei gebildeten Primärproduktes.

Als Phosphonylierungsmittel eignen sich dabei in erster Linie die für Phosphonylierungen bekannten Mittel, wie z.B.
Phosphorige Säure,
Phosphortrichlorid,
Phosphortribromid,
Oligo- und Polyphosphorige Säuren und
Phosphorigsäureanhydrid (Tetraphosphorhexoxid)
oder Gemische dieser Verbindungen.

Ferner erhält man Alkan-diphosphonsäuren der Formel I, wenn man Phosphorige Säure entweder mit

einem gemischten cyclischen Carbonsäure-Phosphinsäure-Anhydrid der allgemeinen Formel IV.

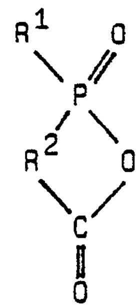 IV

oder mit dem zweifachen Säurechlorid einer Carboxy-alkyl-phosphinsäure der allgemeinen Formel V.

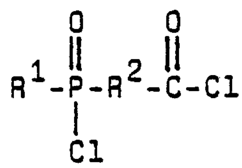 V

umsetzt und analog wie bei der Umsetzung der freien Carboxyalkylphosphonsäure das Umsetzungsprodukt anschließend bei 100 bis 160 °C tempert und das dabei erhaltene Primärprodukt hydrolysiert.
In den Formeln III und IV haben $R^1$ und $R^2$ die bereits in Formel I angegebene Bedeutung.
Bei Verwendung von cyclischen Carbonsäure-Phosphinsäure-Anhydriden der allgemeinen Formel IV als Ausgangsprodukt empfiehlt es sich, zur Erhöhung der Ausbeute, die Umsetzung in Gegenwart von Säureanhydriden, vor allem Anhydriden der Phosphorsäure wie Polyphosphorsäure oder $P_2O_5$ durchzuführen.
Zur Herstellung von Salzen der oben genannten Formel II wird das in der beschriebenen Weise bei der Hydrolyse der Primärprodukte jeweils anfallende Hydrolysat mit einer anorganischen oder organischen Base neutralisiert, deren Kation dem Kation A in der Formel II entspricht.

Generell gesehen, geschieht die Herstellung der erfindungsgemäßen Säuren und Salze in der Weise, daß zunächst die Reaktionskomponenten unter Luft- und Feuchtigkeitsausschluß bei Temperaturen zwischen 0 und 100 °C, vorzugsweise zwischen 20 und 80 °C, miteinander vermischt werden, wobei die zeitliche Reihenfolge der Zugabe der Reaktionspartner beliebig ist. Die Temperatur des Reaktionsgemisches kann durch die Regelung der Dosierungsgeschwindigkeit einer der Reaktionskomponenten oder auch durch Heizung oder Kühlung in dem gewählten Bereich gehalten werden.

Zur Vervollständigung der Umsetzung wird dann das Reaktionsgemisch, gegebenenfalls nach dem Abklingen einer unter Umständen exotherm verlaufenden Anfangsphase - und bei der Verwendung halogenhaltiger Einsatzstoffe, mit nachlassender Halogenwasserstoffentwicklung - bei Temperaturen zwischen 100 und 160 °C, vorzugsweise zwischen 130 und 150 °C 3 bis 30, vorzugsweise 5 bis 20 Stunden lang unter ständiger Durchmischung getempert. Das im allgemeinen hochviskose, beim Abkühlen auf Raumtemperatur meist glasig erstarrende Primärprodukt wird in Wasser aufgenommen und, ggf. nach Zusatz von geringen Mengen einer starken Mineralsäure, zum Sieden erhitzt, um möglicherweise im Reaktionsprodukt vorhandene kondensierte Anteile und Säurehalogenidgruppen durch Hydrolyse zu spalten. Die Abtrennung der Säuren der Formel I von nicht zur Umsetzung gelangten Anteilen der Ausgangskomponenten und von etwaigen Nebenprodukten geschieht zweckmäßigerweise durch die Fällung schwerlöslicher Salze mit den anorganischen oder organischen Basen aus Lösungen des Hydrolysates in Wasser oder in Gemischen von Wasser mit wassermischbaren organischen Lösemitteln. Aus den Salzen gemäß Formel II können die entsprechenden freien Säuren der Formel I z.B. durch Behandlung der Lösungen mit Kationenaustauschern in der $H^+$-Form gewonnen werden.

Als für diese Zwecke geeignete Basen empfiehlt es sich, die Hydroxide der Alkali- bzw. Erdalkalimetalle oder organische Basen wie z.B. Melamin, Guanidin, Harnstoff, Anilin und anderes mehr einzusetzen.

Die erfindungsgemäß hergestellten Verbindungen können als Komplexbildner für mehrwertige Metallionen, als Sequestriermittel in der Wasserbehandlung oder als Zusatz zu Zahnplegemitteln zur Verhinderung der Zahnsteinbildung (sog. "Antitartarmittel") verwendet werden.

Beispiel 1:

Umsetzung von 2-Methyl-2,5-dioxo-1,2-oxaphospholan (einer Verbindung der allgemeinen Formel IV) mit Phosphoriger Säure.

40,2 g (0,3 Mol) 2-Methyl-2,5-dioxo-1,2-oxaphospholan und 49,2 g (0,6 Mol) Phosphorige Säure wurden in einem Glaskolben mit Rühreinrichtung unter Feuchtigkeitsausschluß in einer $N_2$-Atmosphäre bei 80 bis 100 °C zum Schmelzen gebracht. Das Reaktionsgemisch wurde dann innerhalb von einer Stunde auf 150 °C erhitzt und bei dieser Temperatur 10,5 Stunden gerührt. Zu diesem Zeitpunkt wurde eine Probe entnommen, in Wasser gelöst und die erhaltene Lösung zwecks Hydrolyse ggf. vorhandener Säureanhydridfunktionen aufgekocht. Nach Aussage des von dem Hydrolysat aufgenommen $^{31}P$-NMR-Spektrums hatten sich ca. 47 % des eingesetzten 2-Methyl-2,5-dioxo-1,2-oxaphospholans zur 1-Hydroxy-3-(methylphosphinico-) propan-1,1-diphosphonsäure ($^{32}P$-NMR-Signale: Phosphinsäuregruppe 57,5 ppm, Phosphonsäuregruppen 17,2 ppm) umgesetzt.

Danach wurden dem Reaktionsgemisch nochmals 49,2 g (0,6 Mol) Phosphorige Säure hinzugegeben und der Kolbeninhalt weitere 19 Stunden bei 150 bis 160 °C gerührt. Der Umsetzungsgrad zur 1-Hydroxy-3-(methylphosphinico-) propan-1,1-di-phosphonsäure, bezogen auf die Einsatzmenge 2-Methyl-2,5-dioxo-1,2-oxaphospholan, betrug 58 %.

Beispiel 2:

Umsetzung von 2-Methyl-2,5-dioxo-1,2-oxaphospholan (einer Verbindung der allgemeinen Formel IV) mit Phosphoriger Säure.

33,5 g (0,25 Mol) 2-Methyl-2,5-dioxo-1,2-oxaphospholan und 41 g (0,5 Mol) Phosphorige Säure wurden in einem Glaskolben mit Rühreinrichtung unter Feuchtigkeitsausschluß in einer $N_2$-Atmosphäre bei 80 °C aufgeschmolzen und innerhalb von 30 Minuten unter stetigem Rühren auf 150 °C aufgeheizt. Nach einer Reaktionszeit von 4,5 Stunden bei 150 °C wurde eine Probe entnommen, in Wasser gelöst und durch Kochen der wässrigen Lösung hydrolysiert. Nach Aussage des von dem Hydrolysat aufgenommenen $^{31}P$-NMR-Spektrums hatten sich ca. 30 % des eingesetzten 2-Methyl-2,5-dioxo-1,2-oxaphospholans zur 1-Hydroxy-3-(methylphosphinico-) propan-1, 1-diphosphonsäure ($^{31}P$-NMR-Signale: Phosphinsäuregruppe 57,5 ppm, Phosphonsäuregruppen 17,2 ppm) umgesetzt.

Daraufhin wurden dem Reaktionsgemisch 67 g (0,2 Mol) Polyphosphorsäure ($P_2O_5$-Gehalt ca. 84 Gew.%) bei einer Temperatur von 150 °C zugetropft und das so erhaltene Gemisch 24 Stunden bei dieser Temperatur gehalten. Nach dem Abkühlen auf Raumtemperatur lag das Reaktionsgemisch als hochviskose, leicht gelb gefärbte Masse vor. Das nach einer hydrolytischen Aufarbeitung erhaltene Produkt enthält die 1-Hydroxy-3-(methylphosphinico-) propan-1,1-diphosphonsäure (Ausbeute 75 % bezogen auf das eingesetzte 2-Methyl-2,5-dioxo-1,2-oxaphospholan) neben der nicht umgesetzten Phosphorigen Säure, der aus der Hydrolyse der unumgesetzten Oxaphospholans entstandenen Methyl-2-carboxyethyl-phosphinsäure und der aus der Polyphosphorsäure gebildeten Orthophosphorsäure.

Beispiel 3:

Umsetzung von 2-(Chlorcarbonyl-) ethyl-methyl-phosphinsäure-chlorid (einer Verbindung der allgemeinen Formel V) mit Phosphoriger Säure.

In einem 2 1-Rührkolben wurden 378 g (2 Mol) 2-(Chlorcarbonyl-) ethyl-methylphosphinsäure-chlorid

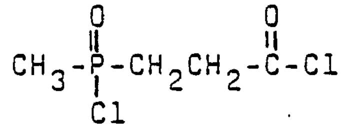

vorgelegt und unter Rühren innerhalb von 90 Minuten 328 g (4 Mol) wasserfreie Phosphorige Säure portionsweise eingetragen, wobei Entwicklung von Chlorwasserstoffgas einsetzte.

Die Temperatur der Reaktionsmischung wurde während der Dauer des Eintragens der Phosphorigen Säure - ggf. durch äußere Kühlung des Reaktionsgefäßes - bei 35 bis 40° C gehalten.

Nach dem Abklingen der Chlorwasserstoffentwicklung wurde die Temperatur der Reaktionsmischung langsam bis auf 130° C erhöht, wobei sich die Chlorwasserstoffentwicklung fortsetzte, und die Reaktionsmischung unter fortgesetztem Rühren 15 Stunden lang bei 130° C gehalten. Es wurden 560 g eines hochviskosen, nach dem Abkühlen glasig erstarrenden Primärproduktes erhalten, das in 560 g Wasser aufgenommen und eine Stunde lang unter Rückfluß gekocht wurde. Nach Aussage des $^{31}P$-NMR-Spektrums liegen in der erhaltenen Lösung ca. 70 % des Gesamtphosphorgehaltes in Form der 1-Hydroxy-3-(methylphosphinico-) propan-1,1-diphosphonsäure vor.

Beispiel 4: Herstellung des Pentaguanidiniumsalzes der 1-Hydroxy-3-(methylphosphinico-) propan-1,1-diphosphonsäure

300 ml der nach Beispiel 3 erhaltenen Hydrolysatlösung mit einem Gehalt an 1-Hydroxy-3-(methylphosphinico-) propan-1,1-diphosphonsäure von 38,1 Gew. % wurden mit 540 g Wasser verdünnt und unter Kontrolle durch eine pH-Elektrode durch Zusatz von Guanidiniumcarbonat auf einen pH-Wert von 9,5 eingestellt. Die dabei erhaltene klare Lösung wurde unter Rühren in eine

Mischung von 4 250 ml Methanol und 940 ml Wasser eingegossen, der dabei ausfallende Niederschlag nach einer Verweilzeit unter der Mutterlauge von 24 Stunden abfiltriert und mit einem Aceton-Wasser-Gemisch im Volumenverhältnis 4 : 1 gewaschen.

Durch Zugabe von 1 700 ml Ethanol zum Filtrat konnte eine zweite Fraktion des Salzes gewonnen werden, die zusammen mit dem zuerst gebildeten Niederschlag bei 65° C und einem Druck von 7 mbar getrocknet wurde. Es verblieben 218 g eines Feststoffes, der aufgrund der Ergebnisse der analytischen Untersuchungen das Pentaguanidiniumsalz der 1-Hydroxy-3-(methylphosphinico-) propan-1,1-diphosphonsäure mit 3 Molen Kristallwasser darstellt.

| | |
|---|---|
| Summenformel: | $C_9H_{38}O_9N_5P_3 \bullet 3H_2O$ |
| berechnete Werte: | N = 32,5 %; P = 14,4 %; $H_2O$ = 8,9 % |
| gefundene Werte : | N = 31,5 %; P = 13,9 %; $H_2O$ = 8,2 % |

$^{31}P$-NMR-Spektrum
= + 46 ppm (Phosphinsäuregruppe, 33 % P von gesamt P)
= + 18 ppm (Phosphonsäuregruppen, 67 % P von gesamt P)

Die Ausbeute, bezogen auf die in der Hydrolyselösung enthaltene 1-Hydroxy-3-(methylphosphinico-) propan-1,1-diphosphonsäure, beträgt 88 %.

Beispiel 5: Umsetzung von Phosphoriger Säure mit 2-(Chlorcarbonyl-) ethyl-methyl-phosphinsäurechlorid

336 g (4,1 Mol) wasserfreie Phosphorige Säure wurden in einem 2-1-Rührkolben unter Feuchtigkeitsausschluß und Überlagerung mit einem langsamen Stickstoffstrom bei etwa 70° C aufgeschmolzen. In diese Schmelze wurden unter stetigem Rühren im Verlaufe von 2,5 Stunden 378 g (2 Mol) 2-(Chlorcarbonyl-) ethyl-methyl-phosphinsäurechlorid eingetropft, wobei die Temperatur der Reaktionsmischung zwischen 65 und 80° C schwankte.

Mit dem Nachlassen der anfänglich einsetzenden Chlorwasserstoffentwincklung wurde der Kolbeninhalt auf 130° C erhitzt und 20 Stunden lang bei Temperaturen zwischen 125 und 130° C gerührt. Nach dem Abkühlen auf Raumtemperatur betrug das Gewicht des Kolbeninhaltes 579 g. Das Reaktionsprodukt wurde anschließend mit der gleichen Gewichtsmenge Wasser unter Zusatz von 14 g konzentrierter Salzsäure 25 Minuten lang zum Rückflußsieden erhitzt. Das $^{31}P$-NMR-Spektrum der erhaltenen Lösung zeigte an, daß 81 % des eingesetzten Phosphors in Form der 1-Hydroxy-3-(methylphosphinico-) propan-1,1diphosphonsäure vorliegen.

Beispiel 6: Herstellung eines Mononatriumsalzes der 1-Hydroxy-3-(methylphosphinico-) propan-1,1-di-

phosphonsäure

100 g der nach Beispiel 5 erhaltenen wäßrigen Lösung mit einem Gehalt an 1-Hydroxy-3-(methylphosphinico-) propan-1,1-diphosphonsäure von 41 % werden mit 200 ml Wasser und 2 000 ml Methanol verdünnt und durch Zugabe von 65 g 15 %iger Natronlauge auf einen pH-Wert von 3,65 eingestellt. Der dabei anfallende Niederschlag wurde 24 Stunden unter der Mutterlauge aufbewahrt, nach dem Dekantieren der Mutterlauge in Methanol aufgeschlämmt, filtriert und mit Aceton gewaschen. Der Filterkuchen wurde in wenig Wasser unter Erwärmen gelöst und durch Eingießen der Lösung in viel Methanol umgefällt. Nach erneutem Filtrieren und Waschen wurde der Niederschlag bei 110 °C bis zur Gewichtskonstanz getrocknet. Es wurden 41 g eines Mononatriumsalzes mit einem Mol Kristallwasser erhalten. Dies entspricht einer Ausbeute von 87 %, bezogen auf die in der Ausgangslösung enthaltene 1-Hydroxy-3-(methylphosphinico-) propan-1,1-diphosphonsäure

| | |
|---|---|
| Summenformel: | $C_4H_{12}O_9P_3Na \bullet H_2O$ |
| Berechnete Werte: | 27,5 % P; 6,8 % Na |
| gefundene Werte: | 27,3 % P; 7,0 % Na. |

Beispiel 7: Umsetzung von 3-Carboxypropyl-methylphosphinsäure mit einem Gemisch von Phosphoriger Säure und Phosphortrichlorid

29,1 g (175 mMol) 3-Carboxypropyl-methylphosphinsäure und 23,9 g (291 mMol) Phosphorige Säure wurden in einem 0,25-l-Rührkolben unter Feuchtigkeitsausschluß in $N_2$-Atmosphäre bei 70 °C aufgeschmolzen. Zu dieser Mischung wurden innerhalb von 30 min 28,0 g Phosphortrichlorid (204 mMol) bei einer Temperatur des Reaktionsgemisches von 65 bis 70 °C zugetropft. Danach wurde das Reaktionsgemisch unter stetigem Rühren auf 135 °C erhitzt. Nach Beendigung der beim Erhitzen eintretenden Chlorwasserstoffentwicklung wurde das Gemisch noch 24 Stunden bei einer Temperatur von 135 °C gerührt. Es wurden 54,5 g eines hochviskosen, nach dem Abkühlen glasig erstarrenden Primärprodukts erhalten, das in 54,5 g Wasser aufgenommen und 1 Stunde lang am Rückfluß gekocht wurde. Nach Aussage des $^{31}$P-NMR-Spektrums liegen in der erhaltenen Lösung ca. 60 % des Gesamtphosphorgehaltes als 1-Hydroxy-4-(methylphosphinico-) butan-1,1-diphosphonsäure vor.

Beispiel 8: Herstellung eines Dinatriumsalzes der 1-Hydroxy-4-(methylphosphinico-) butan-1,1-diphosphonsäure

80 g der nach Beispiel 7 erhaltenen wäßrigen Lösung mit einem Gehalt von 29,6 Gew.-% 1-Hydroxy-4-(methylphosphinico-) butan-1,1-diphosphonsäure wurden mit 80 ml Wasser und 1000 ml Methanol verdünnt und durch Zugabe von 25 Gew.-%iger Natronlauge auf einen pH-Wert von 3,9 einge stellt. Der dabei ausfallende weiße Niederschlag wurde nach 24 Stunden abfiltriert und mit etwas Aceton gewaschen. Der Filterkuchen wurde in wenig Wasser unter Erwärmen gelöst und in 800 ml heißes Methanol eingerührt. Der dabei erhaltene Niederschlag wurde nach 24 Stunden abfiltriert, mit Methanol gewaschen und bei 110 °C bis zur Gewichtskonstanz getrocknet.

Es wurden 33 g eines weißen Feststoffes erhalten, der aufgrund der Ergebnisse der analytischen Untersuchungen das Dinatriumsalz der 1-Hydroxy-4-(methylphosphinico-) butan-1,1-diphosphonsäure mit 2 Molen Kristallwasser darstellt:

| | |
|---|---|
| Summenformel: | $C_5H_{13}O_9P_3Na_2 \bullet 2\ H_2O$ |
| berechnete Werte: | 23,7 % P; 11,7 % Na |
| gefundene Werte: | 24,6 % P; 10,9 % Na. |

$^{31}$-P-NMR-Spektrum

+ 54,5 ppm (Phosphinsäuregruppe, 33,8 % P von Gesamt-P)

+ 18,5 ppm (Phosphonsäuregruppen, 64 % P von Gesamt-P)

**Ansprüche**

1. 1-Hydroxy-ω-(alkyl - bzw. arylphosphinico-) alkan-1,1-diphosphonsäuren der allgemeinen Formel I

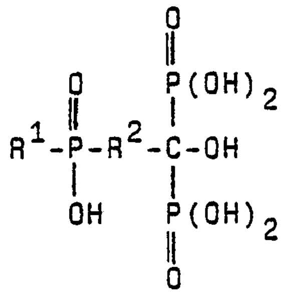

I

und die Salze dieser Säuren der allgemeinen Formel II

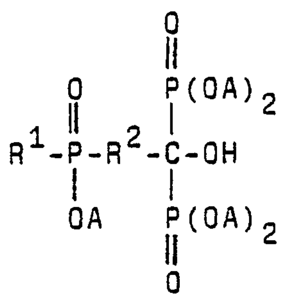

wobei in diesen Formeln $R^1$ einen Alkylrest mit 1 bis 6 C-Atomen, einen Cycloalkylrest mit 5 bis 7 oder einen Arylrest mit 6 bis 10 C-Atomen, $R^2$ einen geradkettigen oder verzweigten Alkylenrest mit 1 bis 6 C-Atomen und A ein einwertiges Äquivalent eines Kations einer anorganischen oder organischen Base bedeuten.

2. Verfahren zur Herstellung von Alkan-diphosphonsäuren der allgemeinen Formel I des Anspruchs 1, <u>dadurch gekennzeichnet</u>, daß man Carboxyalkylphosphinsäuren der allgemeinen Formel III

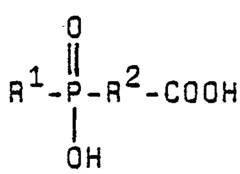

III

in der $R^1$ und $R^2$ die gleiche Bedeutung haben wie in der allgemeinen Formel I, mit Phosphonylierungsmitteln umsetzt, das Umsetzungsprodukt anschließend bei 100 bis 160 °C tempert und das dabei erhaltene Primärprodukt hydrolysiert.

3. Verfahren zur Herstellung von Alkandiphosphonsäuren der allgemeinen Formel I des Anspruchs 1, <u>dadurch gekennzeichnet</u>, daß man Phosphorige Säure mit einem gemischten cyclischen Carbonsäure-Phosphinsäure-Anhydrid der allgemeinen Formel IV

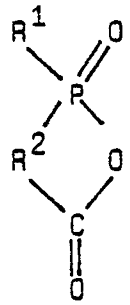

IV

ıachen Säurechlorid einer Carboxyalkylphosphinsäure der allgemeinen Formel V

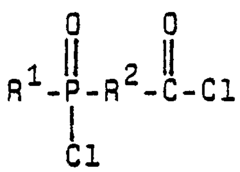

V

ətzungsprodukt anschließend bei 100 bis 160 °C tempert und das dabei ... olysiert, wobei in den allgemeinen Formeln IV und V $R^1$ und $R^2$ die in ... tung haben:

ıch Anspruch 3, dadurch gekennzeichnet, daß man die Umsetzung in Gegen... ırchführt.

..r Herstellung von Salzen der 1-Hydroxy-ω -(alkyl - bzw. arylphosphinico-) ... gemäß der allgemeinen Formel II des Anspruchs 1, dadurch gekennzeichnet, ... ung der Alkan-diphosphonsäuren der allgemeinen Formel I bei Hydrolyse de... Hydrolysat mit einer anorganischen oder organischen Base neutralisiert, dere... Formel II entspricht.

..ch mindestens einem der Ansprüche 2 bis 5, dadurch gekennzeichnet, daß ... ten unter Luft- und Feuchtigkeitsausschluß bei Temperaturen zwischen 0 un... ..nt und umsetzt.

ıch mindestens einem der Ansprüche 2 bis 6, dadurch gekennzeichnet, ... Umsetzungsprodukt 3 bis 30 Stunden bei Temperaturen zwischen 100 und

..ch mindestens einem der Ansprüche 2 bis 7, dadurch gekennzeichnet, daß ... erhaltene Primärprodukt hydrolysiert, indem man es mit Wasser aufnimmt und ...

..ch Anspruch 8, dadurch gekennzeichnet, daß man das Erhitzen in Gegenwa... ... vornimmt.

nach Anspruch 5, dadurch gekennzeichnet, daß man die nach der Neu... ..er Formel II durch Behandlung von deren Lösungen mit Kationenaustausche... ..ren der Formel I überführt.